# DEMANDE DE BREVET EUROPEEN

(11) **EP 0 943 905 A1**
(43) Date de publication de la demande: **22.09.1999**
(21) Numéro de dépôt: 98811143.1
(22) Date de dépôt: 18.11.1998
(51) Int. Cl.: G01G 19/56

(54) **Dispositif de table pour pesage des aliments**

(30) Priorité: 20.11.1997 CH 267797
(71) Demandeur: Egger, Pierre, 2400 Le Locle (CH)
(72) Inventeur: Egger, Pierre, 2400 Le Locle (CH)

(57) **Abrégé**

Ce dispositif de table pour aliments (Voir Fig 1 & 2) est constitué d'un boîtier dont la partie supérieur fait office de balance. Cette balance réglable par tranche de quelques grammes actionne un système de message quand le poids programmé est atteint. Ce message fait place à un avertissement si ce poids est dépassé. Celui-ci ne s'arrête qu'après avoir ôté le surplus de nourriture.

Le message ainsi que l'avertissement peuvent être acoustiques, visuels ou tactiles.

## Description

L'invention concerne un dispositif de table pour aliments comprenant un mécanisme de pesage des aliments.

### Problème technique

Les régimes amaigrissants traditionnels impliquent un difficile changement des habitudes alimentaire du sujet. La perte de poids est rapide mais passagère. Dès que le sujet revient à son régime d'antan, il reprend les kilos perdus.

### Solution

Le dispositif selon l'invention permet de remédier à cet inconvénient en apprenant avec un minimum d'effort à moins manger aux trois périodes des repas principaux.

L'utilisateur, sans devoir renoncer à ses aliments préférés, perd progressivement mais durablement du poids.
Il procède ainsi:
Après avoir posé le dispositif sur la table à manger, il y dépose son assiette et la rempli de nourriture.∗ Un message agréable mais convaincant se manifeste quand le poids de nourriture qu'il a programmé est atteint. Ce poids de nourriture sera petit à petit diminué jusqu'à l'obtention de la silhouette désirée par l'utilisateur.

L'invention est telle que décrite dans la revendication 1.
Le dispositif se caractérise des objets connus, pour avoir des moyens de pesage et de signalisations acoustique, visuel ou tactile ainsi qu'un garde-temps, actionnés par piles incorporés dans son épaisseur.

Les commandes de ces mécanismes se confondent et s'harmonisent avec le décor du dispositif. Le réglage du système de pesage à affichage digital se fait par bouton pression. Si le poids programmé est dépassé le message fait place à un avertissement, celui-ci ne s'arrête qu'après avoir ôté la nourriture en surplus. l'intensité du message et de l'avertissement sont aussi réglable par bouton pression.
* La tare (poids de l'assiette ou autre récipient) est automatiquement déduite avant l'apport de nourriture.

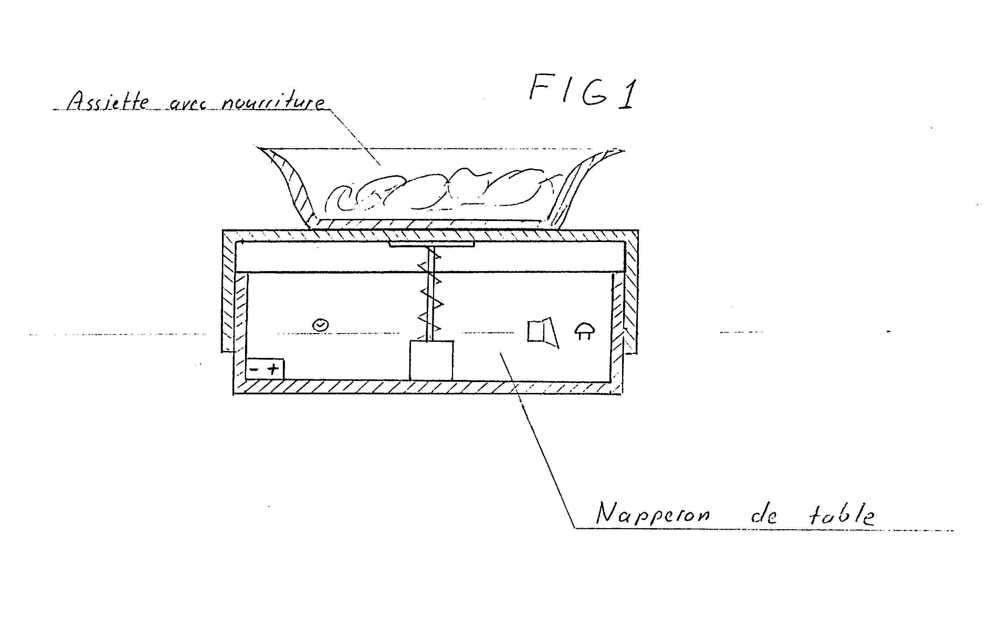

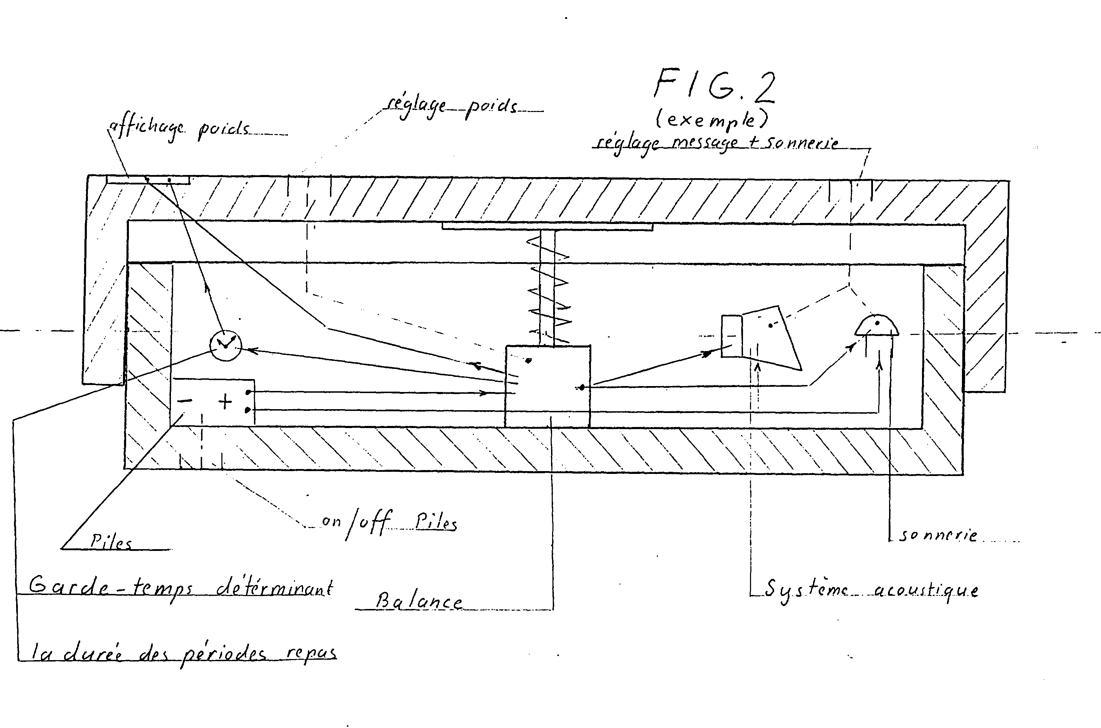

L'invention sera mieux comprise à la lecture de la description de réalisation donné à titre d'exemple, en regard des dessins (Voir FIG 1 et FIG 2).
La figure 1 représente en coupe le dispositif selon l'invention, utilisé avec l'assiette de nourriture.
La figure 2 représente en coupe le dispositif avec les mécanismes intérieur et leurs fonctionnements.

En référence à ces dessins, le dispositif est un boîtier dont la partie supérieur fait office de plateau de balance.

Le dispositif a par exemple la forme classique d'un napperon de table. Il a l'épaisseur minimum requise pour loger en son intérieur les systèmes de pesage, signalisations, garde-temps et piles. Ceci selon les derniers progrès en miniaturisation.

## Revendications

1. Dispositif de table pour aliments caractérisé en ce qu'il comprend intégré, des moyens de pesage des aliments ou du support avec les aliments, posés sur le dit dispositif.

2. Dispositif selon la revendication 1, caractérisé en ce que le moyen de pesage fournit une indication de poids à l'utilisateur sous forme visuelle acoustique ou tactile.

3. Dispositif selon l'une des revendications 1 et 2, caractérisé en ce qu'un signal visuel, acoustique ou tactile est automatiquement déclanché dès que le poids des aliments ou du support avec les aliments exède une valeur prédéterminée, ladite valeur pouvant être modifiée par l'utilisateur.

4. Dispositif selon la revendication 1, caractérisé en ce que les mécanismes de pesage, de message, d'avertissement et de garde-temps sont alimenté en énergie électrique par une ou plusieurs batteries incorporées dans le napperon.

5. Dispositif selon les revendications précédentes caractérisé en ce que des boutons à pression manuelle sont prévus dans le napperon pour introduire ou modifier des données aux mécanismes.

6. Dispositif selon la revendication 5, caractérisée en ce qu'un des boutons sert à faire varier l'intensité des signaux acoustique, visuel ou tactile

7. Dispositif selon la revendication 2, caractérisé par la forme d'un récipient à double fond (Ex. assiette ou verre)

8. Dispositif selon les revendications 1 et 2, caractérisé par la forme et la fonction d'un napperon de table.
